# EUROPEAN PATENT APPLICATION

(11) **EP 2 685 126 A1**
(43) Date of publication of application: **15.01.2014**
(21) Application number: 12754941.8
(22) Date of filing: 13.02.2012
(51) Int. Cl.: F16F 15/08, F16F 1/36, F16F 13/18

(54) **ANTI-VIBRATION DEVICE**

(30) Priority: 10.03.2011 JP 2011053359
(71) Applicant: Bridgestone Corporation, Tokyo 104-8340 (JP)
(72) Inventor: NAGASHIMA, Yasuyuki, Yokohama-shi Kanagawa 244-8510 (JP); SAITOU, Hajime, Yokohama-shi Kanagawa 244-8510 (JP)
(74) Representative: Waldren, Robin Michael
(86) International application number: PCT/JP2012/053893
(87) International publication number: WO 2012/120992

(57) **Abstract**

The present invention provides a vibration damper comprising: a cylindrical body (1); a core member (2) disposed on one side of the cylindrical body (1) on the central axis thereof to be coaxial with the cylindrical body (1); and a main rubber body (3) for connecting an inner peripheral surface of the cylindrical body (1) over the entire circumference thereof to the core member (2), wherein an outer surface of the main rubber body (3) is formed to have a truncated cone-like shape protruding toward the core member (2) in a vertical cross section including the central axis of the main rubber body, the vibration damper is adapted to absorb, primarily by shearing deformation of the main rubber body (3), vibrations inputted in the central axis direction from a member on the vibration-generation side, so that the inputted vibrations are prevented from being transmitted to a member on the vibration-transmission side, and the main rubber body (3) is constituted of two types of rubber elastic bodies (3a, 3b) having different rubber hardness values and firmly and integrally attached to each other over the circumference of the cylindrical body (1).

## Description

### TECHNICAL FIELD

The present invention relates to a vibration damper suitably used as an engine mount or the like, having a cylindrical body, a core member disposed on one side of the cylindrical body on the central axis thereof to be coaxial with the cylindrical body, and a truncated-cone-shaped main rubber body for combining the cylindrical body with the core member, and adapted to absorb vibrations in the central axis direction inputted from a member on the vibration-generation side primarily by shearing deformation of the main rubber body, to function to prevent the inputted vibrations from being transmitted to a member on the vibration-transmission side. The present invention proposes in particular a technique for effectively suppressing what is called a "surging phenomenon" possibly occurring in the main rubber body provided between the cylindrical body and the core member when the vibration damper is in use, to ensure that the vibration damper can constantly demonstrate good vibration-damping performance as desired.

### BACKGROUND ART

Such a vibration damper as described above is often used in a state where the cylindrical body and the core member thereof are mounted to a member on the engine side and a member on the vehicle body side, respectively. In this case, the main rubber body firmly attached to the rigid cylindrical body and the rigid core member, respectively, constitutes a spring-mass system including the rubber as a" spring" and the weight of the rubber as "mass" when vibrations inputted from the member on the engine side is absorbed by elastic deformation of the main rubber body. In a case where a vibration having natural oscillation frequency, e.g. frequency around 1000 Hz, is inputted, self-excited vibration of the main rubber body occurs to rapidly increase amplification thereof, thereby resulting in hard spring characteristics (what is called a "surging phenomenon") and making it impossible for the vibration damper to demonstrate good vibration-damping performance as desired.

In order to address such a surging phenomenon as described above, Patent Literature 1 proposes providing a ring member having density of 2 g/cm³ or more and hardness Hs of 80 or below in the central region of an outer surface of the main rubber body such that the ring member extends along the entire periphery of the central region. Patent Literature 1 states that, as a result of this, the natural oscillation frequency of the main rubber body itself changes due to an increase in weight of the main rubber body including the ring member, thereby successfully preventing such a self-excited vibration of the main rubber body as described above from occurring. Patent Literature 1 also states that change in elasticity characteristics of the main rubber body, as well as concentration of stress on the main rubber body, which are caused by constraint exerted on the main rubber body by the ring member, can be suppressed by forming the ring member by a rubber elastic body having relatively low hardness. However, the weight of the entire apparatus inevitably increases in the vibration damper of Patent Literature 1, thereby causing a new problem that fuel consumption rate of the vehicle deteriorates when the vibration damper is used as an engine mount in particular.

### CITATION LIST

### Patent Literature

PTL 1: JP-A 10-267069

### SUMMARY OF THE INVENTION

### Technical Problems

The present invention aims at solving such problems of the prior art as described above and an object thereof is to provide a vibration damper capable of effectively preventing a surging phenomenon from occurring without increasing weight of the vibration damper, to ensure that the vibration damper can demonstrate vibration performances as desired.

### Solution to the Problems

Through a numerical analysis by FEM (Finite Element Method), the inventors of the present invention has keenly studied behaviors when vibration are inputted, of such a truncated-cone-shaped elastic body as the main rubber body described above having an outer surface protruding on one side in the central axis direction in a vertical cross section thereof. As a result of the study, the inventors discovered that i) peak values at resonance frequencies of respective orders, of dynamic spring constant of an elastic body, can be significantly decreased, as compared with an elastic body constituted of a single type of elastic component and ii) frequencies at which peaks occur of the dynamic spring constant can be shifted on either the higher-frequency side or the lower-frequency side than the resonance frequency, by constituting the truncated-cone-shaped elastic body of two types of elastic components having different rubber hardness values and firmly fixed to each other at plural positions on respective peripheries thereof
Then, the inventors of the present invention assumed that surging should be effectively prevented from occurring by applying these discoveries to a vibration damper.

A vibration damper of the present invention based on the aforementioned findings comprises: a cylindrical body; a core member disposed on one side of the cylindrical body on the central axis thereof to be coaxial with the cylindrical body; and a main rubber body for connecting an inner peripheral surface of the cylindrical body over the entire circumference thereof to the core member, wherein an outer surface of the main rubber body is formed to have a truncated cone-like shape protruding toward the core member in a vertical cross section including the central axis of the main rubber body, the vibration damper is adapted to absorb, primarily by shearing deformation of the main rubber body, vibrations inputted in the central axis direction from a member on the vibration-generation side, so that the inputted vibrations are prevented from being transmitted to a member on the vibration-transmission side, and the main rubber body is constituted of two types of rubber elastic bodies having different rubber hardness values in the range of, e.g. JIS A hardness 45 to 60, and firmly and integrally attached to each other over the circumference of the cylindrical body.

Difference in rubber hardness between the two types of rubber elastic bodies is preferably within the range of 4 to 15 in JIS A hardness in the present invention. "JIS A hardness" represents durometer hardness determined by a durometer hardness test using a type-A durometer as prescribed by JIS K6253 in the present invention.

Further, in the present invention, in a case where the main rubber body for connecting an inner peripheral surface of the cylindrical body over the entire circumference thereof to the core member is constituted of a hard rubber portion and a soft rubber portion continuous to each other in the circumferential direction of the cylindrical body, the hard rubber portion preferably occupies 25% of the total circumferential area where hard rubber and soft rubber are disposed in the main rubber body.

### Advantageous Effect of the Invention

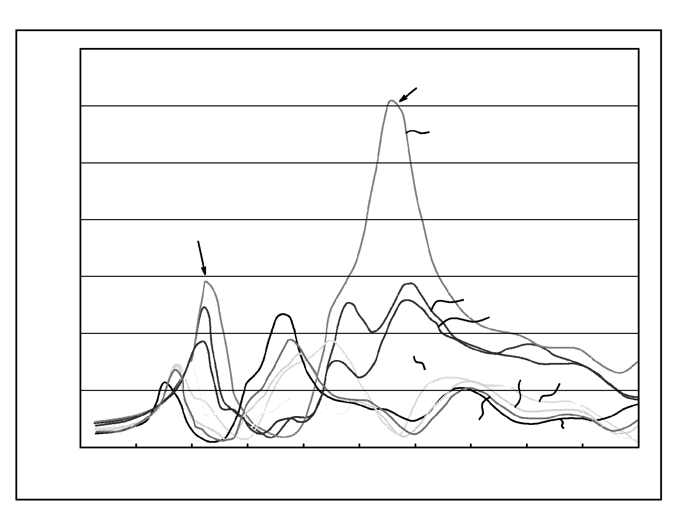

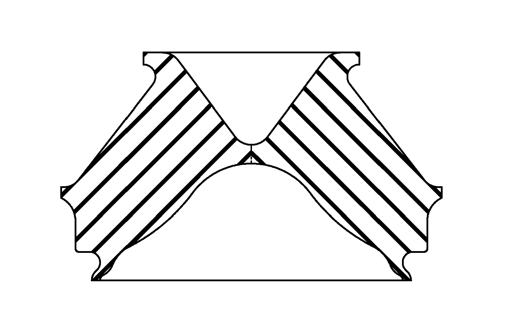

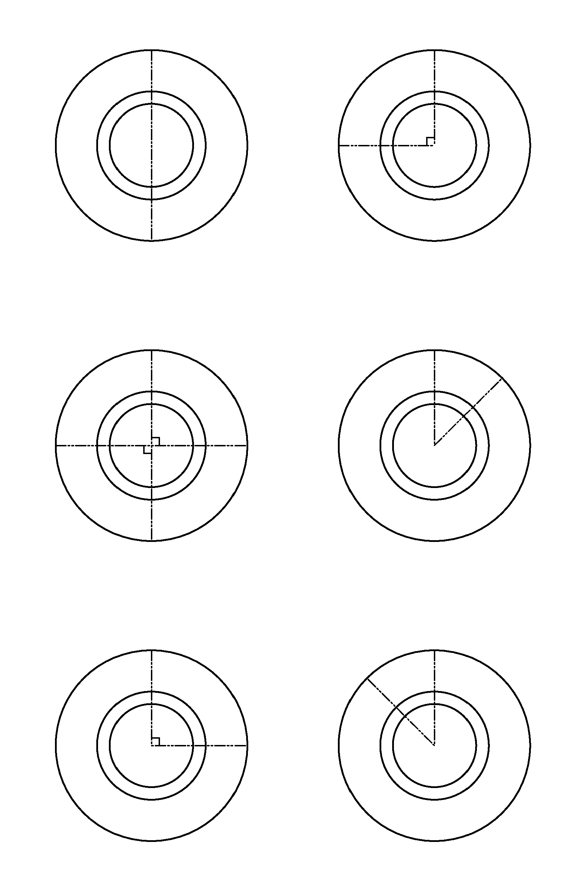

FIG. 1 shows the results of the analysis using Finite Element Method in the form of a graph of frequency of inputted vibration vs. corresponding dynamic spring constant.
Specifically, the numerical analysis summarized in FIG. 1 included the steps of: assuming an elastic body with an outer surface formed to have a truncated cone-like shape protruding toward one side in the central axis direction in a vertical cross section thereof, as shown in a cross sectional view in the vertical direction of FIG. 2; simulating a model of the elastic body where a circumferential surface to be firmly attached to the core member, of a recess formed in the center region of a top surface of the elastic body, and an outer peripheral surface to be firmly attached to the inner peripheral surface of the cylindrical body, of the elastic body, are both assumed as fixed ends; changing in the model in various manners respective regions in the circumferential direction of the elastic body, in which regions two types of elastic components having different rubber hardness (45 and 55 in JIS A hardness) are disposed, as shown in plan views of FIGS. 3A to 3F; and calculating change in dynamic spring constant when a vibration was inputted.
FIG. 1 also shows for reference the analysis results of an elastic body constituted of only the elastic component of rubber hardness 45 and an elastic body constituted of only the elastic component of rubber hardness: 55, respectively.

It is clearly understood from FIG. 1 that the elastic body samples each constituted of two types of elastic components having different rubber hardness values firmly attached to each other, as shown in FIGS. 3A to 3F, unanimously exhibit significantly reduced peak values of dynamic spring constant at resonance frequencies of primary and secondary orders, as compared with an elastic body constituted of a single type of elastic component having rubber hardness of 55.
It is assumed that the aforementioned phenomenon occurs in the elastic bodies of FIGS. E3A to 3F because one elastic component having rubber hardness of 45 and another elastic component having rubber hardness of 55, integrally and firmly attached to each other to constitute an elastic body, exhibit different behaviors in terms of magnitude of amplification and phase when vibrations are inputted, thereby suppressing each other's amplification of vibration.

More specifically, according to the results shown in FIG. 1, an elastic body having the lower percentage of a circumferential area of the elastic component with rubber hardness: 55 in the main rubber body tends to exhibit the lower peak values of dynamic spring constant at resonance frequencies of respective orders.
The elastic body constituted of only a single type of elastic component having rubber hardness: 45, of which static spring constant is relatively small, exhibits smaller peak values of dynamic spring constant than the elastic body constituted of only a single type of elastic component having rubber hardness: 55.

Further, it is understood from the results shown in FIG. 1 that the elastic body constituted of two types of elastic components having different rubber hardness, in which a sector-shaped circumferential area (x 2) having the central angle: 90° of one of the components and a sector-shaped circumferential area (x 2) having the central angle: 90° of the other of the components are alternately disposed in the circumferential direction as shown in FIG. 3B, exhibits peak frequencies of both primary and secondary orders shifted toward the low-frequency side, as compared with the corresponding peak frequencies of the elastic body constituted of only a single type of elastic component having rubber hardness: 55.

The aforementioned analysis results reveal that, according to the vibration damper of the present invention, it is possible to significantly decrease peak values of dynamic spring constant of the main rubber body itself and shift peak-generating frequencies of the main rubber body toward either the higher-frequency side or the lower-frequency side than the input vibration frequency which causes surging in the conventional vibration damper, while ensuring good static spring characteristics required of, e.g. an engine mount, thereby effectively preventing a surging phenomenon from occurring without increasing weight of the vibration damper due to additional provision of an extra member thereon, by constituting the main rubber body for connecting an inner peripheral surface of the cylindrical body to the core member, of two types of rubber elastic bodies having different rubber hardness values and firmly and integrally attached to each other over the circumference of the cylindrical body.

In this regard, it is possible by setting difference in rubber hardness between the two types of rubber elastic bodies to be within the range of 4 to 15 in JIS A hardness to achieve in a well compatible manner both an effect of decreasing peak values of dynamic spring constant of the main rubber body and an effect by the main rubber body of suppressing vibrations inputted thereto, which effects are caused by forming the main rubber body by two different types of rubber elastic bodies.
In other words, when the aforementioned difference in rubber hardness is less than 4 in JIS A hardness, an effect of decreasing peak values of dynamic spring constant of the main rubber body, which effect is caused by the difference in rubber hardness, may not be sufficiently demonstrated when vibrations are inputted because the difference in rubber hardness is too small, thereby possibly resulting in a surging phenomenon depending on inputted vibrations. When the aforementioned difference in rubber hardness exceeds 15 in JIS A hardness, one of the two types of rubber elastic bodies has too small or too high rubber hardness, whereby inputted vibrations may not be adequately absorbed by shearing deformation of the main rubber body.

The aforementioned numerical analysis revealed that an elastic body constituted of a hard elastic component portion and a soft elastic component portion continuous to each other in the circumferential direction as shown in FIG. 3C, wherein the hard elastic component portion occupies 25% of the total circumferential area where the hard elastic component and the low elastic component are disposed in the main rubber body, exhibits significantly decreased peak values of dynamic spring constant, as shown in FIG. 1. Accordingly, it is possible to effectively prevent surging from occurring, while ensuring a required magnitude of static spring constant, under the influence of soft rubber occupying a significant portion of the main rubber body by applying the result of FIG. 3C to the vibration damper, i.e. constituting the main rubber body for connecting an inner peripheral surface of the cylindrical body over the entire circumference thereof to the core member, of a hard rubber portion and a soft rubber portion continuous to each other in the circumferential direction of the cylindrical body such that a circumferential area where hard rubber is disposed occupies 25% of the total circumferential area where hard rubber and soft rubber are disposed in the main rubber body.

### BRIEF DESCRIPTION OF THE DRAWINGS

FIG. 1 is a graph showing the results of the analysis using Finite Element Method in the form of frequency of inputted vibration vs. corresponding dynamic spring constant.
FIG. 2 is a vertical cross sectional view of a main rubber body as an elastic body model used in the numerical analysis of FIG. 1, cut along a plane including the central axis thereof
FIGS. 3A to 3F are plan views each showing circumferential areas where two types of elastic components having different rubber hardness values are disposed, respectively, of an elastic body model used in the numerical analysis of FIG. 1.
FIG. 4 is a vertical cross sectional view of the vibration damper according to an embodiment of the present invention, cut along a plane including the central axis thereof
FIG. 5 is a transverse cross sectional view of the vibration damper of FIG. 4, cut along the V-V line of the drawing.
FIG. 6A and FIG. 6B are transverse cross sectional views similar to FIG. 5, each showing a modified example of the main rubber body.
FIG. 7 is a vertical cross sectional view similar to FIG. 4, showing another embodiment of the vibration damper of the present invention.

### DESCRIPTION OF THE EMBODIMENTS

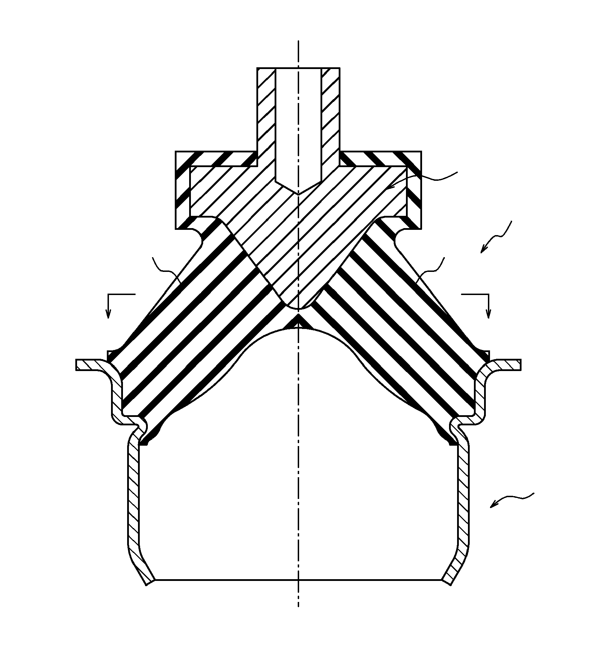

One embodiment of the present invention will be described hereinafter with reference to the drawings.
A vibration damper according to the one embodiment of the present invention is shown in FIG. 4. The vibration damper has: a cylindrical body 1 made of a rigid material such as metal, plastic or the like; a core member 2 made of a rigid material and disposed on one side of the cylindrical body 1 on the central axis thereof (the upper side in FIG. 4) to be coaxial with the cylindrical body 1; and a main rubber body 3 for connecting an inner peripheral surface of the cylindrical body 1 to the core member 2.
It should be noted that inner and outer contour configurations of a transverse cross section of the cylindrical body may be polygonal (not shown in the drawings).
An outer surface of the main rubber body 3 is formed to have, e.g. a truncated cone-like shape protruding toward the core member 2 in a vertical cross section like FIG. 4 in the present embodiment.

The vibration damper can be used by mounting the cylindrical body 1 to one of a member on the vibration-generation side and a member on the vibration-transmission side and mounting the core member 2 to the other of these members, so that the vibration damper functions to absorb vibrations inputted in the vertical direction in FIG. 4 from the member on the vibration-generation primarily by shearing deformation of the main rubber body 3, to prevent the vibrations thus inputted from being transmitted to the member on the vibration-transmission side.

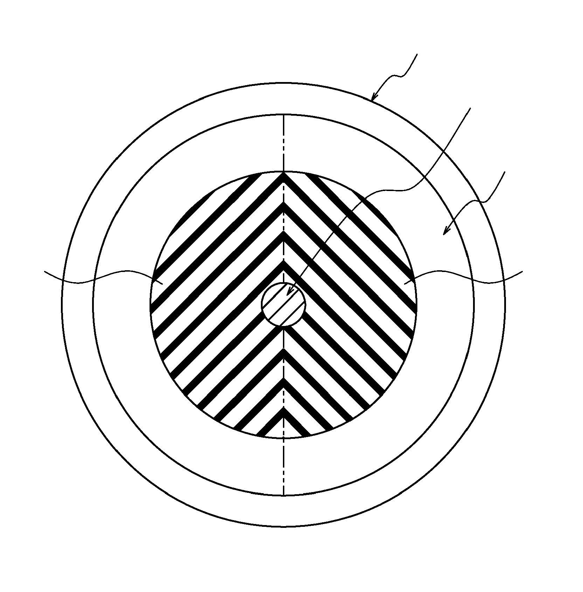

In the present embodiment, the main rubber body 3 firmly attached to an inner peripheral surface of the cylindrical body 1 and the core member 2, respectively, constitutes a spring-mass system including the rubber as a" spring" and the weight of the rubber as "mass". When a vibration having frequency close to the natural oscillation frequency of the spring-mass system, e.g. frequency around 1000 Hz, is inputted to the vibration damper, self-excited vibration of the main rubber body 3 may occur to rapidly increase amplification and dynamic spring constant thereof, i.e. possibly resulting a surging phenomenon. In the present invention, to address this surging problem, the main rubber body 3 is constituted of two types of rubber elastic bodies having different rubber hardness values, e.g. two types of rubber elastic bodies 3a, 3b having high rubber hardness and low rubber hardness, respectively, which are firmly attached to each other in the circumferential direction of the cylindrical body 1 as shown in a transverse cross sectional view of FIG. 5 so that the main rubber body 3 can exhibit static spring characteristics as required.

As a result of the unique structure of the main rubber body described above, as is known from the analysis results shown in FIG. 1, it is possible to i) significantly decrease peak values as a whole of dynamic spring constant of the main rubber body 3, as compared with a main rubber body constituted of only a single type of rubber elastic body having high rubber hardness and ii) shift frequencies at which peaks of the dynamic spring constant occur on either the higher-frequency side or the lower-frequency side than the resonance frequency of the main rubber body constituted of only a single type of rubber elastic body having high rubber hardness, so that self-excited vibration of the main rubber body 3 is effectively suppressed without significantly decreasing static spring constant, to prevent a surging phenomenon from occurring.

The vibration damper as described above can be manufactured by: first disposing a cylindrical body and a core member, respectively, in a mold in the opened state; closing the mold; injecting two types of crude rubbers each in a viscous-fluid state from two injection ports, respectively, into a cavity formed inside the mold to fill the cavity therewith; and vulcanizing the crude rubbers (the processes are not shown in the drawings).
The rubber elastic body 3a having high rubber hardness and the rubber elastic body 3b having low rubber hardness of the main rubber body 3 are integrally and firmly attached to each other in the vibration damper manufactured as described above.

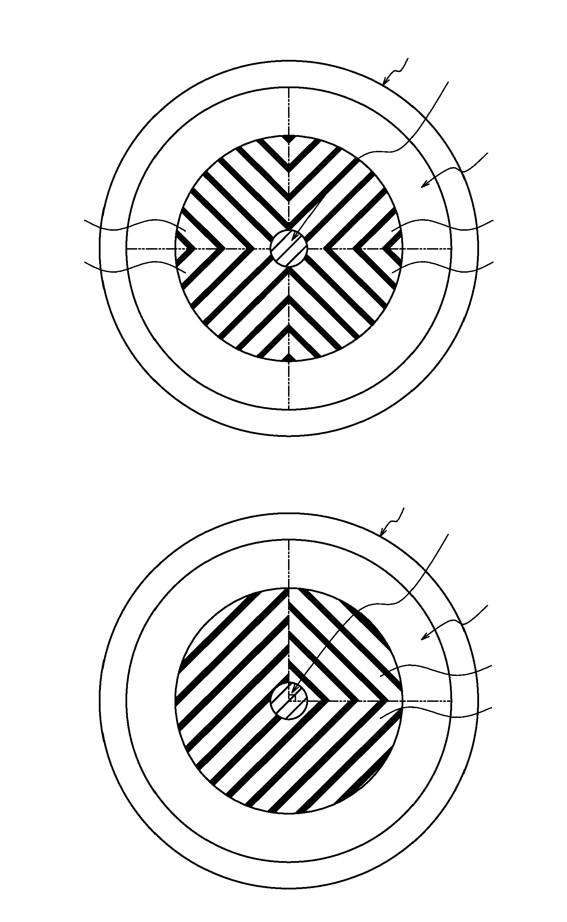

The main rubber body 3 shown in FIG. 4 and FIG. 5 is constituted of the two types of rubber elastic bodies 3a, 3b continuous to each other in the circumferential direction of the cylindrical body 1 and structured specifically by disposing a sector-shaped rubber elastic body 3a having the central angle: 180° and a sector-shaped rubber elastic body 3b having the central angle: 180° to be continuous to each other in the circumferential direction. The main rubber body, however, may be constituted of two different types of rubber elastic bodies by disposing a sector-shaped rubber elastic body (x 2) 13a, 13c having the central angle: 90° of one type of elastic component and a sector-shaped rubber elastic body (x 2) 13b, 13d having the central angle: 90° of the other type of elastic component alternately in the circumferential direction of the cylindrical body 1 as shown in FIG. 6A. The sector-shaped rubber elastic bodies 13a and 13c share the same rubber hardness and the sector-shaped rubber elastic bodies 13b and 13d share the same rubber hardness in the example shown in FIG. 6A.
It is also possible to constitute the main rubber body, of two different types of rubber elastic bodies, by disposing six or more sector-shaped rubber elastic bodies (i.e. at least three sector-shaped rubber elastic bodies of one type of elastic component and at least three sector-shaped rubber elastic bodies of the other type of elastic component) in the circumferential direction of the cylindrical body (not shown in the drawings).

According to the vibration damper as shown in FIG. 6A, as is known from the analysis results shown in FIG. 1, it is possible to i) decrease peak values of dynamic spring constant of the main rubber body 13, as compared with a main rubber body constituted of only a single type of rubber elastic body having high rubber hardness and ii) shift peak-generation frequencies on the lower-frequency side than the peak-generation frequencies of the main rubber body constituted of only a single type of rubber elastic body having high rubber hardness. On this basis, it is reasonably assumed that occurrence of surging can be more reliably prevented by appropriately changing respective proportions of circumferential areas of the rubber elastic bodies 13a-13d with respect to the total circumferential area where the elastic components are disposed in the main rubber body.

Percentage of a circumferential area occupied by the hard rubber and percentage of a circumferential area occupied by the soft rubber with respect to the total circumferential area where the elastic components are disposed in the main rubber body 3 are both 50% in the example of the vibration damper shown in FIG. 4 and FIG. 5. However, according to the analysis results shown in FIG. 1, it is preferable in terms of further decreasing peak values of dynamic spring constant of the main rubber body to set percentage of a circumferential area occupied by the hard rubber elastic body 23 a with respect to the total circumferential area where the elastic components are disposed in the main rubber body 23 for connecting an inner peripheral surface of the cylindrical body 1 over the entire circumference thereof to the core member 2, to be 25%, as shown in FIG. 6B.

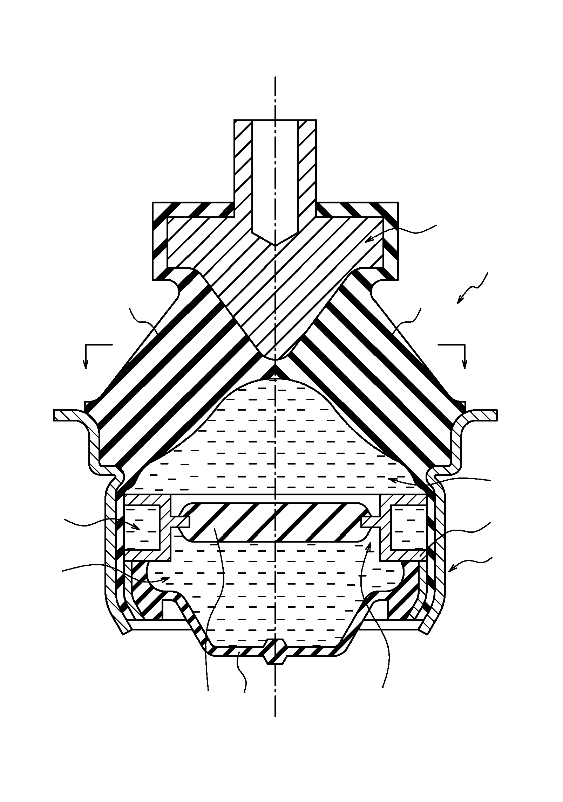

FIG. 7 shows a vibration damper according to another embodiment of the present invention. This vibration damper has the same structure as the vibration damper shown in FIG. 4, except that in the former i) a diaphragm 34 for fluid-tight sealing an opening, on the other side in the central axis direction (the lower side in FIG. 7), of the cylindrical body 31 is provided on the other side end of the cylindrical body 31 and ii) a sectioning wall 3 7 formed by a membrane 36 firmly attached to an inner peripheral surface of a passage-constituting member 35 is provided inside the cylindrical body 31, such that two liquid chambers 38, 39 in which incompressible fluid is sealed are formed in the damper and that these liquid chambers 38, 39 communicate to each other via a restricted passage 40 formed by an outer peripheral surface of the passage-constituting member 35.

The liquid sealed-in type vibration damper shown in FIG. 7 is mounted to a member on the vibration-generation side and a member on the vibration-transmission side, respectively, as is the case with the vibration damper shown in FIG. 4, so that the liquid sealed-in type vibration damper functions to attenuate vibrations inputted in the vertical direction in FIG. 7 from the member on the vibration-generation side, by liquid column resonance caused by fluid moving between the two liquid chambers 38, 39 via the restricted passage 40 in the damper, flow resistance effected on the fluid by the restricted passage 40, and the like, as well as absorption and attenuation caused by elastic deformation of the main rubber body 33, thereby preventing the inputted vibrations from being transmitted to the member on the vibration-transmission side.

Such a liquid sealed-in type vibration damper as described above can effectively prevent surging due to self-excited vibration of the main rubber body 33 from occurring, by constituting the main rubber body 33 of two types of rubber elastic bodies 33a, 33b having different rubber hardness values and firmly attached to each other in the circumferential direction of the cylindrical body 31, because then the two types of rubber elastic bodies 33a, 33b function to suppress each other's vibration when vibrations are externally inputted.

### REFERENCE SIGNS LIST

- 1, 31: Cylindrical body
- 2, 32: Core member
- 3, 13, 23, 33: Main rubber body
- 3a, 3b, 13a-13d, 33a, 33b: Rubber elastic body
- 23a: Hard rubber
- 23b: Soft rubber
- 34: Diaphragm
- 35: Passage-constituting member
- 36: Membrane
- 37: Sectioning wall
- 38, 39: Liquid chamber
- 40: Restricted passage

## Claims

1. A vibration damper comprising:
a cylindrical body;
a core member disposed on one side of the cylindrical body on the central axis thereof to be coaxial with the cylindrical body; and
a main rubber body for connecting an inner peripheral surface of the cylindrical body over the entire circumference thereof to the core member,
wherein an outer surface of the main rubber body is formed to have a truncated cone-like shape protruding toward the core member in a vertical cross section including the central axis of the main rubber body,
the vibration damper is adapted to absorb, primarily by shearing deformation of the main rubber body, vibrations inputted in the central axis direction from a member on the vibration-generation side, so that the inputted vibrations are prevented from being transmitted to a member on the vibration-transmission side, and
the main rubber body is constituted of two types of rubber elastic bodies having different rubber hardness values and firmly and integrally attached to each other over the circumference of the cylindrical body.

2. The vibration damper of claim 1, wherein difference in rubber hardness between the two types of rubber elastic bodies is within the range of 4 to 15 in JIS A hardness.

3. The vibration damper of claim 1 or 2, wherein the main rubber body for connecting an inner peripheral surface of the cylindrical body over the entire circumference thereof to the core member is constituted of a hard rubber portion and a soft rubber portion continuous to each other in the circumferential direction of the cylindrical body and the hard rubber portion occupies 25% of the total circumferential area where hard rubber and soft rubber are disposed in the main rubber body.
